# EUROPEAN PATENT SPECIFICATION

(11) **EP 4 491 521 B1**
(45) Date of publication and mention of the grant of the patent: **06.05.2026**
(21) Application number: 23185142.9
(22) Date of filing: 12.07.2023
(51) Int. Cl.: B64D 47/04, B60Q 9/00, B64D 47/06, F21W 107/30

(54) **AIRCRAFT LIGHT, AIRCRAFT COMPRISING AN AIRCRAFT LIGHT AND METHOD OF MANUFACTURING AN AIRCRAFT LIGHT**
FLUGZEUGLEUCHTE, FLUGZEUG MIT EINER FLUGZEUGLEUCHTE UND VERFAHREN ZUR HERSTELLUNG EINER FLUGZEUGLEUCHTE
FEU D'AÉRONEF, AÉRONEF COMPRENANT UN FEU D'AÉRONEF ET PROCÉDÉ DE FABRICATION D'UN FEU D'AÉRONEF

(43) Date of publication of application: 15.01.2025
(73) Proprietor: Goodrich Lighting Systems GmbH & Co. KG, 59557 Lippstadt (DE)
(72) Inventor: Völkel, Stefan, 59555 Lippstadt (DE); Ebbers, Thomas, 33181 Bad Wünnenberg (DE); Schröder, Lars Christian, 33659 Bielefeld (DE)
(74) Representative: Schmitt-Nilson Schraud Waibel Wohlfrom Patentanwälte Partnerschaft mbB

(56) References cited:
- US-A1- 2008 048 200
- US-A1- 2017 181 246
- US-A1- 2018 194 089
- US-A1- 2019 187 445
- US-A1- 2019 331 316
- US-A1- 2019 382 132

## Description

The present invention relates to aircraft lighting. In particular, the present invention relates to an aircraft light having a light transmissive optical element / lens. The present invention further relates to an aircraft comprising such an aircraft light and to a method of manufacturing an aircraft light.

Almost all aircraft are equipped with numerous lights, including exterior aircraft lights and interior aircraft lights. In particular, large passenger air planes are provided with a wide variety of exterior and interior aircraft lights.

Exterior aircraft lights are employed for a wide variety of different purposes, such as for allowing the passengers and/or air crew to view the outside, for passive visibility, for signaling purposes, etc. Examples of such exterior aircraft lights are navigation lights, also referred to as position lights, red-flashing beacon lights, white strobe anti-collision lights, wing scan lights, take-off lights, landing lights, taxi lights, runway turn-off lights, etc.

Interior aircraft lights are also employed for a wide variety of different purposes, such as for providing general passenger cabin illumination, for providing individual illumination of passenger spaces, etc.

An aircraft light may comprise at least one support element supporting at least one light source and at least one optical element for forming a desired light output of the aircraft light from the light emitted by the at least one light source.

Depending on the desired light output of the aircraft light, the at least one optical element may have a complex geometry, which may require a complex process of manufacturing. Reliably positioning the at least one optical element in a desired position with respect to the support element for achieving the desired light output may be challenging as well.

US 2008/0048200 A1 discloses overmolded lenses and certain fabrication techniques for LED structures. In one embodiment, thin YAG phosphor plates are formed and affixed over blue LEDs mounted on a submount wafer. A clear lens is then molded over each LED structure during a single molding process. The LEDs are then separated from the wafer. The molded lens may include red phosphor to generate a warmer white light. In another embodiment, the phosphor plates are first temporarily mounted on a backplate, and a lens containing a red phosphor is molded over the phosphor plates. The plates with overmolded lenses are removed from the backplate and affixed to the top of an energizing LED. A clear lens is then molded over each LED structure. The shape of the molded phosphor-loaded lenses may be designed to improve the color vs. angle uniformity. Multiple dies may be encapsulated by a single lens. In another embodiment, a prefabricated collimating lens is glued to the flat top of an overmolded lens.

US 2019/0187445 A1 discloses an environmentally-sealed refractive lighting optic that includes a single light-emitting diode (LED) printed circuit card that includes a plurality of LED components and a single, refractive optic element retained directly to the LED printed circuit card in a self-sealing manner without mechanical fasteners. The refractive optic element is configured to environmentally seal the LED components on the LED printed circuit card. Further, the refractive optic element may include a liquid silicone rubber material or an optically-clear low-pressure molded room temperature vulcanizing (RTV) silicone material.

US 2019/0382132 A1 discloses an aircraft beacon light that includes a mounting plate having a central portion; a plurality of light sources arranged on the mounting plate around the central portion and facing away from the mounting plate; and a lens structure arranged over the plurality of light sources, wherein the lens structure is configured to reflect a first portion of light emitted by the plurality of light sources laterally outwards via total internal reflection; wherein the aircraft beacon light is configured to emit flashes of red light in operation.

US 2017/0181246 A1 discloses an exterior aircraft light unit that includes a support plate, an LED, mounted to the support plate, a near end of life detector for sensing a light output level of the LED, the near end of life detector being mounted to the support plate, and a transparent optical element for shaping an output light intensity distribution of the exterior aircraft light unit, wherein the transparent optical element jointly encases the LED and the near end of life detector, with light from the LED reaching the near end of life detector through the transparent optical element.

US 2018/0194089 A1 discloses a method for manufacturing an optical component that may include mixing two precursors of silicone, opening a first gate of an optic forming device, moving the silicone mixture from the extrusion machine into the optic forming device, cooling the silicone mixture as it enters the optic forming device, filling a mold within the optic forming device with the silicone mixture, closing the first gate, and heating the silicone mixture in the mold to at least partially cure the silicone.

It would be beneficial to provide an aircraft light which allows for a comparably easy manufacturing and assembly of the components of the aircraft light.

Embodiments of the invention include an aircraft light in accordance with claim 1 and a method of manufacturing an aircraft light in accordance with claim 12. Further embodiments of the invention are given in the dependent claims.

Exemplary embodiments of the invention include an aircraft light comprising a support element, supporting at least one light source, in particular at least one LED, and an injection molded optical element, which is made of light transmissive silicone rubber. A layer of light transmissive silicone rubber is arranged between at least a portion of the injection molded optical element and at least a portion of the support element. The layer of light transmissive silicone rubber provides adhesion between the injection molded optical element and the support element. This adhesion may fix the injection molded optical element at a defined position with respect to the support element.

Exemplary embodiments of the invention further include a method of manufacturing an aircraft light, wherein the method comprises: providing a support element, supporting at least one light source, in particular at least one LED; manufacturing an injection molded optical element from liquid light transmissive silicone rubber by injection molding; placing the injection molded optical element in a defined position and orientation on the support element; and providing adhesion between the injection molded optical element and the support element by forming, in particular molding, a layer of light transmissive silicone rubber between at least a portion of the injection molded optical element and at least a portion of the support element. The providing of adhesion may fix the injection molded optical element in the defined position and orientation to the support element.

According to an exemplary embodiment of the invention, the injection molded optical element is formed by injection molding. Injection molding provides a highly efficient way of forming the injection molded optical element. Injection molding may in particular allow for forming complex structures of the injection molded optical element, potentially having portions with small dimensions and/or edges / corners with small radii of curvature, with high quality and with high reliability. Injection molding may in particular allow for forming complex geometries, which may not be or may only be achieved in a non-efficient manner via other molding techniques.

Further, according to an exemplary embodiment of the invention, the layer of light transmissive silicone rubber is formed by introducing a fluid phase of the light transmissive silicone rubber at a pressure that is considerably lower than the relatively high pressure employed in injection molding. The layer of light transmissive silicone rubber may in particular be formed by "gravity molding", i.e. by introducing the fluid phase of the light transmissive silicone rubber between the support element and the injection molded optical element only driven by gravity.

For forming the injection molded optical element, the silicone rubber material may be injected with a high pressure p_{high} into a suitable mold.

The layer of light transmissive silicone rubber may be formed at a considerably lower pressure p_{low}.

The pressure p_{high}, used for forming the injection molded optical element, may be at least 10 times as large as the pressure p_{low}, at which the layer of light transmissive silicone rubber is formed. In particular, the pressure p_{high}, used for forming the injection molded optical element, may be at least 30 times as large as the pressure p_{low}, at which the layer of light transmissive silicone rubber is formed.

Due to employing a considerably lower pressure p_{low} for forming the layer of light transmissive silicone rubber, only small forces are exerted onto the injection molded optical element, the support element and any components, in particular light sources, that are arranged on the support element, when the layer of light transmissive silicone rubber is formed. In consequence, the risk of damaging the injection molded optical element, the support element or any components that are arranged on the support element, when forming the layer of light transmissive silicone rubber, is considerably reduced, as compared to a comparative example of injection molding the combined geometry of all silicone rubber elements onto the support element of the aircraft light, in which scenario much higher pressures would act on the support element and the components that are arranged on the support element.

In an aircraft light according to an exemplary embodiment of the invention, light emitted by the at least one light source may travel first through the layer of light transmissive silicone rubber and then through the injection molded optical element. Refractive and/or reflective effects of the injection molded optical element contribute to shaping a desired light output of the aircraft light.

The combination of manufacturing the optical element by injection molding and adhering the injection molded optical element to a support element by a second molding process, which is performed at a considerably lower pressure than the injection molding, allows for a highly effective manufacturing of an aircraft light, in particular of an aircraft light including an optical element having a complex structure. The superior properties of injection molding in terms of shaping complex geometries may be made use of in the first molding process, while a more gentle second molding process may be used for the critical act of molding onto the support element and, potentially, other components.

The adhesion between the injection molded optical element and the support element via the layer of light transmissive silicone rubber may be the only means of attachment between the injection molded optical element and the support element. In other words, it is possible that the injection molded optical element and the support element are positioned relative to each other, potentially in a touching arrangement, and the layer of light transmissive silicone rubber provides for the fixation of these components to each other. It is also possible that some form of primary attachment exists between the injection molded optical element and the support element and that the layer of light transmissive silicone rubber provides for a secondary attachment. For example, there may be a positive fit between one or more portions of the injection molded optical element and one or more portions of the support element as a primary attachment, and the layer of light transmissive silicone rubber provides for the secondary attachment via adhesion.

The layer of light transmissive silicone rubber may be directly adjacent to / directly attached to the injection molded optical element and the support element. The arrangement is still considered directly adjacent in case a thin intermediate functional layer is present, in particular between the support element and the layer of light transmissive silicone rubber. For example, the support element may be provided with a protective paint / protective coating and/or may be treated with a primer that enhances adhesion between the layer of light transmissive silicone rubber and the support element.

In an embodiment, the support element is a support board, in particular circuit board. The support element may in particular be a printed circuit board ("PCB"). The printed circuit board may comprise conductors for supplying electrical power to the at least one light source.

In an embodiment, the layer of light transmissive silicone rubber fills the whole cavity between the support element / the at least one light source and potentially other components arranged on the support element on the one hand and the injection molded optical element on the other hand.

In another embodiment, one or more light blocking elements are provided within the cavity between the support element / the at least one light source and potentially other components arranged on the support element on the one hand and the injection molded optical element on the other hand. The layer of light transmissive silicone rubber may then fill the remainder of said cavity. The one or more light blocking elements may be made from silicone rubber, admixed with an opaque additive, or may be made from another opaque material. The one or more light blocking elements may be arranged at one or more predefined positions between the support element and the injection molded optical element, in order to have a desired, selective light blocking effect for shaping the light output of the aircraft light.

In an embodiment, the layer of light transmissive silicone rubber extends substantially parallel to the support element and/or substantially parallel to a mounting surface of the injection molded optical element, with the mounting surface facing the support element. Such a structure may allow for efficiently adhering the injection molded optical element to the support element.

In an embodiment, a method according to an exemplary embodiment of the invention includes forming the layer of light transmissive silicone rubber such that it extends substantially parallel to the support element and/or substantially parallel to a mounting surface of the injection molded optical element, with the mounting surface facing the support element.

In an embodiment, the layer of light transmissive silicone rubber has a substantially constant thickness along its extension along a mounting surface of the injection molded optical element.

In an embodiment, a method according to an exemplary embodiment of the invention includes forming the layer of light transmissive silicone rubber such that it has a constant thickness along its extension along a mounting surface of the injection molded optical element.

In an embodiment, the thickness of the layer of light transmissive silicone rubber varies along its extension along a mounting surface of the injection molded optical element.

In an embodiment, a method according to an exemplary embodiment of the invention includes forming the layer of light transmissive silicone rubber such that its thickness varies along its extension along a mounting surface of the injection molded optical element.

The thickness of the layer of light transmissive silicone rubber may in particular vary due to an uneven structure of the mounting surface of the injection molded optical element and/or due to an uneven structure of the side of the support element facing the mounting surface of the injection molded optical element. The uneven structure of the support element may in particular be due to electronic components provided on the support element, such as the at least one light source and ancillary electronic components.

The layer of light transmissive silicone rubber may in particular have a thickness of between 1 mm and 10 mm, further in particular a thickness of between 2 mm and 7 mm.

In an embodiment, a method according to an exemplary embodiment of the invention includes forming the layer of light transmissive silicone rubber such that it has a thickness of between 1 mm and 10 mm, in particular a thickness of between 2 mm and 7 mm.

A thickness in this range has been found as suitable for securely fixing the injection molded optical element to the support element, while allowing for a large volume of the injection molded optical element.

In an embodiment, at least one first portion of the support element is directly adjacent to the injection molded optical element and at least one second portion of the support element is directly adjacent to the layer of light transmissive silicone rubber.

In an embodiment, a method according to an exemplary embodiment of the invention includes forming the layer of light transmissive silicone rubber such that at least one first portion of the support element is directly adjacent to the injection molded optical element and at least one second portion of the support element is directly adjacent to the layer of light transmissive silicone rubber.

The at least one first portion of the support element may in particular be not adhered to the injection molded optical element by the layer of light transmissive silicone rubber, and the at least one second portion of the support element may be adhered to the layer of light transmissive silicone rubber.

In an embodiment, the injection molded optical element is made of the same kind of light transmissive silicone rubber as the layer of light transmissive silicone rubber. The layer of light transmissive silicone rubber may in particular be joined with the injection molded optical element such that there is no recognizable interface between the injection molded optical element and the layer of light transmissive silicone rubber. While the same kind of light transmissive silicone rubber may provide for a particularly well-behaved interface between the injection molded optical element and the layer of light transmissive silicone rubber, it is also possible that the injection molded optical element and the layer of light transmissive silicone rubber are from different, but similar kinds of silicone rubber. Similar kinds of silicone rubber may in particular still allow for a good adhesion between the injection molded optical element and the layer of light transmissive silicone rubber.

In an embodiment, the layer of light transmissive silicone rubber is cross-linked to the injection molded optical element. Cross-linking is an effective means for adhering the layer of light transmissive silicone rubber to the injection molded optical element such that there is no recognizable interface between the injection molded optical element and the layer of light transmissive silicone rubber. In absence of a recognizable interface between the injection molded optical element and the layer of light transmissive silicone rubber, there is no optical boundary between the injection molded optical element and the layer of light transmissive silicone rubber. This may prevent the occurrence of undesirable refractive and/or reflective effects, which could occur at a recognizable interface between the injection molded optical element and the layer of light transmissive silicone rubber. Cross-linking works particularly well in case the injection molded optical element and the layer of light transmissive silicone rubber are from the same kind of light transmissive silicone rubber. However, cross-linking may also work for similar kinds of silicone rubber.

In an embodiment, a method according to an exemplary embodiment of the invention includes forming the layer of light transmissive silicone rubber of the same kind of light transmissive silicone rubber as the injection molded optical element. The molding the layer of light transmissive silicone rubber may in particular comprise joining an interface portion of the silicone rubber of the layer of light transmissive silicone rubber to the injection molded optical element, for example by cross-linking, so that there is not recognizable interface between the injection molded optical element and the layer of light transmissive silicone rubber.

In an embodiment, the cross-linking between the injection molded optical element and the layer of light transmissive silicone rubber takes place, when the injection molded optical element is already in a completely cured state.

In an embodiment, the injection molded optical element comprises at least one lens portion and/or at least one reflector portion. The injection molded optical element may in particular comprise a combination of one or more refractive portions / lens portions and one or more reflective portions. The reflective portion(s) may in particular include portion(s) at which the light is reflected by total internal reflection.

In an embodiment, a method according to an exemplary embodiment of the invention includes forming the injection molded optical element with at least one lens portion and/or with at least one reflector portion. The injection molded optical element may in particular be formed as comprising a combination of one or more refractive portions / lens portions and one or more reflective portions. The reflective portion(s) may in particular include portion(s) at which the light is reflected by total internal reflection.

An injection molded optical element that comprises at least one lens portion and/ or at least one reflector portion may allow for efficiently transforming light, which is emitted by the at least one light source, into a desired light output of the aircraft light.

In an embodiment, the injection molded optical element is a pre-formed, originally separate component, in particular a pre-formed, originally separate lens. Such a separate component may be pre-formed in a separate manufacturing process with high efficiency, with high quality, and/or at low costs. The injection molded optical element may in particular be formed with a very low amount of entrapped air in the injection molded material.

A method according to an exemplary embodiment of the invention may include pre-forming the injection molded optical element as a separate component.

In an embodiment, the at least one light source is embedded within the layer of light transmissive silicone rubber.

In an embodiment, a method according to an exemplary embodiment of the invention includes embedding the at least one light source within the layer of light transmissive silicone rubber.

Embedding the at least one light source within the layer of light transmissive silicone rubber may efficiently protect the at least one light source from adverse environmental influences, such as impact, water, moisture and/or dirt.

In an embodiment, the injection molded optical element comprises a recess for accommodating the layer of light transmissive silicone rubber. The recess may in particular be open towards the support element.

In an embodiment, a method according to an exemplary embodiment of the invention includes forming a recess within the injection molded optical element and filling the layer of light transmissive silicone rubber into said recess. The recess may in particular be formed such that it is open towards the support element.

Providing such a recess in the injection molded optical element may allow for providing a well-defined mold for the layer of light transmissive silicone rubber. This may enhance the adhering capabilities provided by the layer of light transmissive silicone rubber.

In an embodiment, the recess has a diameter of between 5 mm and 150 mm, in particular a diameter of between 10 mm and 80 mm. In an embodiment, the recess has a depth of between 1 mm and 10 mm, in particular a depth of between 2 mm and 7 mm. Such dimensions of the recess have been found as well suited for manufacturing various kinds of aircraft lights.

In an embodiment, the support element comprises at least one opening, in particular two or more openings, and the layer of light transmissive silicone rubber comprises at least one protrusion, in particular two or more protrusions, extending through the at least one opening formed in the support element.

In an embodiment, a method according to an exemplary embodiment of the invention includes forming at least one opening, in particular two or more openings, within the support element. The method may further include forming at least one protrusion, in particular two or more protrusions, of the layer of light transmissive silicone rubber, with the at least one protrusion extending through the at least one opening formed in the support element.

The at least one opening provided in support element may allow for introducing the light transmissive silicone rubber for forming the layer of light transmissive silicone rubber between the support element and the injection molded optical element. The support element may in particular comprise at least one opening for passing the liquid light transmissive silicone rubber through the support element; and the support element may in particular comprise at least one additional opening for allowing air, which is squeezed out by the introduced light transmissive silicone rubber, to pass through the support element.

The at least one protrusion of the layer of light transmissive silicone rubber that extends through the support element may also enhance the mechanical connection between the layer of light transmissive silicone rubber and the support element. This may result in an enhanced mechanical stability of the aircraft light.

In a method according to an exemplary embodiment of the invention, the molding of the layer of light transmissive silicone rubber may include at least one of the following steps: passing liquid light transmissive silicone rubber through at least one opening formed in the support element; filling liquid light transmissive silicone rubber into a recess that is formed in the injection molded optical element and that faces the support element; and molding the layer of light transmissive silicone rubber via gravity molding.

In addition to or as an alternative to the support element comprising at least one opening and the layer of light transmissive silicone rubber comprising at least one protrusion extending through the at least one opening formed in the support element, the injection molded optical element may comprise at least one opening, in particular two or more openings, and the layer of light transmissive silicone rubber may comprise at least one protrusion, in particular two or more protrusions, extending through the at least one opening formed in the injection molded optical element. The at least one protrusion, which extends through the at least one opening in the injection molded optical element, may extend along the support element and, potentially, around the support element. The considerations, as discussed above with respect to the at least one protrusion through the support element, apply to the at least one protrusion through the injection molded optical element in an analogous manner.

In an embodiment, the injection molded optical element is positioned on the support element employing a kinematic coupling fixture. The kinematic coupling fixture may establish a fixed position of the injection molded optical element on the support element.

In an embodiment, a method according to an exemplary embodiment of the invention includes positioning the injection molded optical element on the support element employing a kinematic coupling fixture.

Employing a kinematic coupling fixture may allow for reliably positioning the injection molded optical element in a predefined position on the support element. In this way, the injection molded optical element may in particular be positioned at a predefined position with respect to the at least one light source for generating a predefined light output of the aircraft light from light emitted by the at least one light source or for providing a well-defined contribution to a predefined light output of the aircraft light from light emitted by the at least one light source.

Establishing the fixed position of the injection molded optical element with respect to the support element via a kinematic coupling fixture may be particularly beneficial in an aircraft light, in particular in an exterior aircraft light. The kinematic coupling fixture may be an effective way of addressing an increasing demand in light output accuracy of aircraft lights. The kinematic coupling fixture and the resulting accurate relative positioning of the at least one light source with respect to the injection molded optical element may help in addressing legal requirements for light output accuracy, such as the sharp cut-off between the red, green and white sectors of aircraft navigation lights, and/or demands for light output accuracy by aircraft manufacturers and/or aircraft operators, such as the demand for a highly accurate illumination of a landing target by a landing light.

According to an embodiment, the kinematic coupling fixture constrains six degrees of freedom of the injection molded optical element with respect to the support element. In particular, the kinematic coupling fixture may constrain three translational degrees of freedom and three rotational degrees of freedom. In this way, the injection molded optical element may be exactly constrained with respect to the support element. The injection molded optical element may be neither over-constrained nor under-constrained with respect to the support element. The constraining of the injection molded optical element with respect to the support element in six degrees of freedom may be achieved via a set of mechanical interfaces. Each of the set of mechanical interfaces may constrain one or two or three degrees of freedom.

According to an embodiment, the kinematic coupling fixture comprises: three constraint shoes, arranged on the support element; and three coupling legs, each coupling leg extending from the injection molded optical element and being in engagement with a respective one of the three constraint shoes. In other words, each coupling leg may be associated with a respective one of the three constraint shoes. Thus, three pairs of a respective constraint shoe and a respective coupling leg may be formed. Each of the three pairs of constraint shoes and coupling legs may form a mechanical interface of the kinematic coupling fixture. The term constraint shoe, as used herein, refers to a receiving structure for a coupling leg. The kinematic coupling fixture may have exactly three constraint shoes and three coupling legs, i.e. exactly three mechanical interfaces between the injection molded optical element and the support element. The three pairs of constraint shoes and coupling legs may provide for six contact points between the injection molded optical element and the support element. The six contact points may constrain the injection molded optical element with respect to the support element in six degrees of freedom.

According to an embodiment, the three pairs of constraint shoes and coupling legs are arranged around the at least one light source. In this way, the arrangement of the injection molded optical element over the at least one light source may be achieved in a particularly stable manner. The joint provision of positioning accuracy and mechanical stability may be achieved in a particularly effective manner.

According to an embodiment, each of the three constraint shoes comprises a v-shaped groove. The term v-shaped groove refers to a groove whose side faces are inclined. While the term v-shaped groove may refer to a groove that represents a full v in cross-section, the cross-section of the groove does not have to be a full v. For example, the bottom of the v can be cut-off or flattened. Even with such a cut-off or flattened bottom, the v-shaped groove still has inclined side faces and is considered v-shaped. V-shaped grooves are effective receiving structures for the coupling legs, extending from the injection molded optical element, and allow for an effective, multi-point engagement between the respective coupling leg and the respective constraint shoe. In particular, each of the v-shaped grooves may provide two contact points between the injection molded optical element and the support element.

According to an embodiment, the v-shaped grooves are arranged around a center portion of the kinematic coupling fixture and are orientated towards the center portion of the kinematic coupling fixture. The v-shaped grooves may be considered radial grooves, when seen from the center portion of the kinematic coupling fixture. In such an arrangement, the v-shaped grooves are angled with respect to each other. In other words, no two v-shaped grooves coincide in direction or are parallel in direction, with the direction being defined as a virtual line running along the respective groove.

According to an embodiment, the three constraint shoes are arranged around the at least one light source in a non-rotationally-symmetric manner. In particular, the three v-shaped grooves may be arranged around the at least one light source in a non-rotationally-symmetric manner. For example, as seen from the at least one light source and/or as seen from the center portion of the kinematic coupling fixture, two of the three constraint shoes may be arranged at an angle of about 90° with respect to each other, with the third constraint shoe being arranged at an angle of about 135° with respect to each of the other two constraint shoes. Other distributions of the three constraint shoes around the light source are possible as well. With a non-rotationally-symmetric arrangement of the three constraint shoes around the at least one light source, the injection molded optical element may fit into the three constraint shoes in one orientation only. This may help in providing an efficient assembly process. An efficient assembly process may help with the high numbers of aircraft lights commonly installed in modern aircraft. The injection molded optical element may have three coupling legs that are distributed around the injection molded optical element in a matching manner, i.e. in an arrangement matching the distribution of the constraint shoes around the at least one light source.

According to an embodiment, the three constraint shoes are substantially equally spaced from the at least one light source and/or from the center portion of the kinematic coupling fixture. Analogously, the three coupling legs may be substantially equally spaced from the at least one light source and/or from the center portion of the kinematic coupling fixture. In this way, a particularly high degree of mechanical stability of the injection molded optical element with respect to the support element may be achieved.

According to an embodiment, the three constraint shoes are attached to the support element. In particular, the three constraint shoes may be glued to or soldered to or fixed to the support element in any other suitable manner. Alternatively, it is possible that the three constraint shoes are machined into the support element. In any of these cases, the three constraint shoes have fixed positions with respect to the support element.

According to an embodiment, each of the three coupling legs has an at least partially spherical engagement portion. The term at least partially spherical engagement portion may refer to an at least semi-spherical engagement portion, with the semi-spherical shape facing the respective constraint shoe. Said semi-spherical shape may be well-suited for achieving a multi-point contact with the constraint shoe, in particular with a constraint shoe in the form of a v-shaped groove. The term semi-spherical does not exclude the provision of an additional coupling element at the very end of the coupling leg, such as described below, and/or a somewhat flattened end of the semi-spherical shape, facing the constraint shoe, or another shape modification at the end part of the at least partially spherical engagement portion.

According to an embodiment, each of the three coupling legs has a fixing rod, extending through the respective constraint shoe and extending into or through the support element. In this way, the coupling legs may integrate the mating functionality for the kinematic coupling fixture with a mechanical fixation functionality between the injection molded optical element and the support element. During assembly of the aircraft light, the engagement portions of the coupling legs may engage with the constraint shoes for establishing the fixed position of the injection molded optical element with respect to the support element. In an ensuing operation, the fixing rods may be worked for achieving an initial mechanical fixation between the injection molded optical element and the support element, while maintaining the fixed position established by the kinematic coupling fixture. The fixing rod may be used in any suitable manner for achieving the mechanical fixation.

Exemplary embodiments of the invention further include an aircraft light that is manufactured in accordance with a method according to an exemplary embodiment of the present invention.

According to an embodiment, the aircraft light, as described herein, is an exterior aircraft light. Exterior aircraft lights according to exemplary embodiments of the invention may include a red-flashing anti-collision beacon light, a white anti-collision strobe light, a landing light, a take-off light, a taxi light, a runway turn-off light, a navigation light, a logo light, a wing scan light, an engine scan light, a cargo loading light, or a multi-functional exterior aircraft light, which combines the functionalities of at least two of a red-flashing anti-collision beacon light, a white anti-collision strobe light, a landing light, a take-off light, a taxi light, a runway turn-off light, a navigation light, a logo light, a wing scan light, an engine scan light, and a cargo loading light.

According to an embodiment, the aircraft light, as described herein, is an interior aircraft light. Interior aircraft lights according to exemplary embodiments of the invention may include a general cabin illumination light, a signal light, or a passenger reading light.

Exemplary embodiments of the invention further include an aircraft, such as an airplane or a helicopter or a multicopter, that is equipped with at least one aircraft light according to an exemplary embodiment of the invention. The additional features, modifications and effects, as described above with respect to an aircraft light in accordance with exemplary embodiments of the invention, apply to the aircraft in an analogous manner.

Further exemplary embodiments of the invention are described below with respect to the accompanying drawings, wherein:
Fig. 1A shows a schematic top view of an aircraft according to an exemplary embodiment of the invention, which is equipped with a variety of aircraft lights;
Fig. 1B shows a schematic front view of the aircraft shown in Fig. 1A;
Fig. 2 shows a cross-sectional view of an aircraft light according to an exemplary embodiment of the invention.
Figs. 3A to 3F show various views of exemplary components of an aircraft light, in which a kinematic coupling fixture is employed.

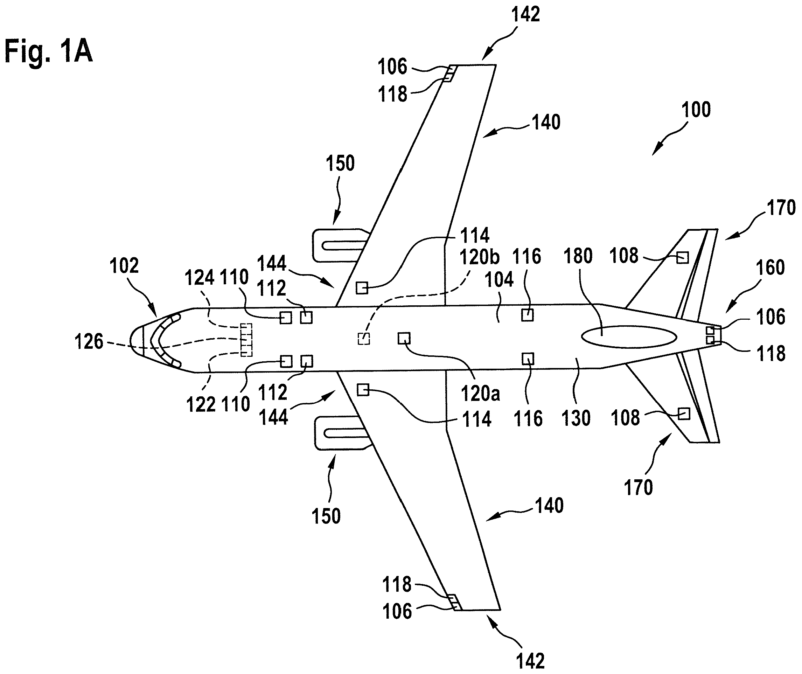

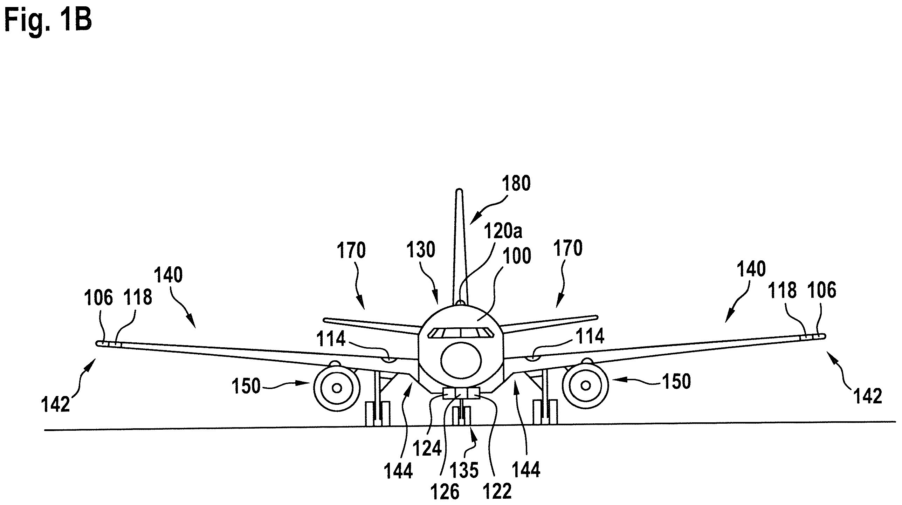

Figs. 1A and 1B, jointly also referred to as Fig. 1 herein, show an aircraft 100, in particular an airplane, comprising a fuselage 130, which houses a cockpit 102 and a passenger cabin 104, and two wings 140, extending from the fuselage 130. Two horizontal stabilizers 170 and a vertical stabilizer 180 extend from a rear portion of the fuselage 130. An engine 150 is mounted to each of the wings 140, respectively. The aircraft 100 is shown in a top view in Fig. 1A and shown in a front view in Fig. 1B.

The aircraft 100 of Fig. 1 is equipped with a wide variety of exterior aircraft lights. In particular, the aircraft 100 is equipped with three navigation lights 106, two logo lights 108, two wing scan lights 110, two engine scan lights 112, two runway turn-off lights 114, two cargo loading lights 116, three white anti-collision strobe lights 118, two red-flashing anti-collision beacon lights 120a, 120b, a landing light 122, a take-off light 124 and a taxi light 126. It is pointed out that these kinds of lights and their numbers are exemplary only and that the aircraft 100 may be equipped with additional lights that are not shown.

The three navigation lights 106 are positioned in the left and right wing tips 142 as well as at the tail 160 of the aircraft 100. In normal flight conditions, each one of the navigation lights 106 emits light in one of the colors green, red and white, thus indicating to the aircraft environment if they are looking at the port side, starboard side or tail side of the aircraft. The navigation lights 106 are normally on during all phases of the flight and in all flight conditions.

The logo lights 108 are directed to the vertical stabilizer 180 of the aircraft 100 and are provided for illuminating the same, in particular for illuminating the logo commonly provided on the vertical stabilizer 180. The logo lights 108 are normally switched on for the entire duration of the flight during night flights. It is also possible that the logo lights are only used during taxiing on the airport and are normally switched off during the flight.

The wing scan lights 110 and the engine scan lights 112 are positioned on the left and right sides of the fuselage 130, in front of the roots 144 of the wings 140 of the aircraft 100. The wing scan lights 110 and the engine scan lights 112 are normally off during the flight and may be switched on periodically or upon reasonable cause by the pilots or by the aircrew, in order to check the wings 140 and the engines 150 of the aircraft 100.

The runway turn-off lights 114 are positioned in the roots 144 of the wings 140. The runway turn-off lights 114 are directed forwards and are normally switched off during the flight and switched on during taxiing, at least at night.

The cargo loading lights 116 are positioned on the left and right sides of the fuselage 130, behind the wings 140 and in front of the tail structure of the aircraft 100. They are normally switched off during the flight of the aircraft 100.

The white anti-collision strobe lights 118 are positioned in the left and right wing tips 142 as well as at the tail 160 of the aircraft 100. The white anti-collision strobe lights 118 emit respective sequences of white light flashes during normal operation of the aircraft 100. It is also possible that the white anti-collision strobe lights 118 are only operated during night and in bad weather conditions.

A first red-flashing anti-collision beacon light 120a is positioned on the top of the fuselage 130 of the aircraft 100, and a second red-flashing anti-collision beacon light 120b is positioned at the bottom of the fuselage 130 of the aircraft 100. The second red-flashing anti-collision beacon light 120b, disposed on the bottom of the fuselage 130, is shown in phantom in Fig. 1A.

The first and second red-flashing anti-collision beacon lights 120a, 120b are arranged at the height of the wings in the longitudinal direction of the aircraft 100. The red-flashing anti-collision beacon lights 120a, 120b are normally switched on during taxiing and during take-off and landing. Their output is perceived as a sequence of red light flashes in a given viewing direction.

In the embodiment depicted in Fig. 1, the runway turn-off lights 114 are located in the wings 140, in particular in the roots 144 of the wings 140, and the landing light 122, the take-off light 124 and the taxi light 126 are mounted to the front gear 135 of the aircraft 100. The front gear 135 is stored within the fuselage 130 of the aircraft 100 during flight, and it is deployed during landing, taxiing and take off.

In alternative embodiments, which are not explicitly shown in the Figs., the runway turn-off lights 114 may be mounted to the front gear 135 and/or at least one of the landing light 122, the take-off light 124 and the taxi light 126 may be installed in the wings 140, in particular in the roots 144 of the wings 140, of the aircraft 100.

The aircraft 100 may also comprise one or more multi-functional lights, which combine(s) the functionalities of at least two of a landing light, a take-off light, a taxi light, and a runway turn-off light.

Since the landing light 122, the take-off light 124, and the taxi light 126 are arranged on the bottom of the aircraft 100, they are also depicted in phantom in Fig. 1A.

Each of these exterior aircraft lights may be an exterior aircraft light according to an exemplary embodiment of the invention.

The aircraft 100 of Fig. 1 is further equipped with a wide variety of interior aircraft lights. In particular, the aircraft 100 is equipped with a plurality of general cabin illumination lights, a plurality of signal lights, and a plurality of passenger reading lights. Each of these interior aircraft lights may be an interior aircraft light according to an exemplary embodiment of the invention.

When equipped with one or more exterior and/or interior aircraft lights in accordance with exemplary embodiments of the invention, the aircraft 100 is an aircraft in accordance with an exemplary embodiment of the invention.

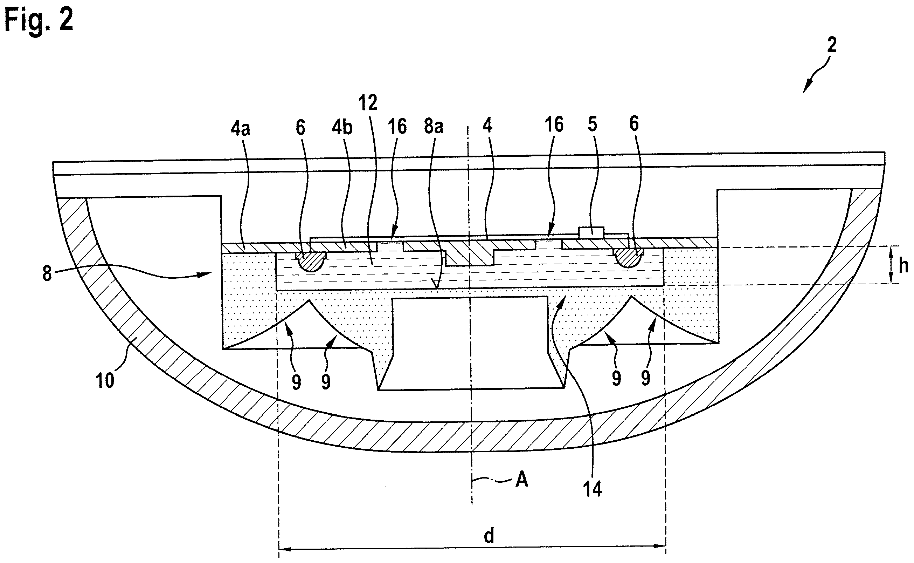

Fig. 2 shows a cross-sectional view of an exterior aircraft light 2 according to an exemplary embodiment of the invention. The exterior aircraft light 2 of Fig. 2 is a red-flashing beacon light and may be employed as either one of the red-flashing beacon lights 120a, 120b depicted in Fig. 1. It is stressed again that the exterior aircraft light 2 of Fig. 2 is an exemplary embodiment of the invention only and that other types of exterior aircraft lights may be embodied in accordance with the exemplary embodiments of the invention as described herein. Also, various types of interior aircraft lights may be embodied in accordance with exemplary embodiments of the invention as described herein.

The cross-sectional view of Fig. 2 is a vertical cross-sectional view in the aircraft frame of reference. Various components of the exterior aircraft light 2 may have rotational symmetry with respect to an axis A.

The exterior aircraft light 2 comprises a support element 4, supporting at least one light source 6. Two light sources 6 are depicted in the cross-sectional view shown in Fig. 2. The exterior aircraft light 2 may comprise additional light sources, which are not visible in the cross-sectional view. For example, the exterior aircraft light 2 may comprise an annular arrangement of light sources around the axis A. The at least one light source 6 may be a least one LED.

The support element 4 may be a support board, in particular circuit board, further in particular a printed circuit board ("PCB"). The printed circuit board may comprise conductors for supplying electrical power to the at least one light source 6. The support element 4 may further support control electronics 5 for controlling the operation of the at least one light source 6.

The exterior aircraft light 2 further comprises an injection molded optical element 8. The injection molded optical element 8 is shaped for forming a desired light output of the exterior aircraft light 2 from the light emitted by the at least one light source 6.

The injection molded optical element 8 is made of light transmissive silicone rubber. In the embodiment depicted in Fig. 2, the injection molded optical element 8 is a light transmissive lens structure, which also comprises light reflective portions 9. The injection molded optical element 8 may in particular include light reflective portions 9 at which at least a portion of the light, emitted by the at least one light source 6, is reflected by total internal reflection. The feature that the injection molded optical element 8 comprises a combination of refractive portions and light reflective portions 9 is, however, optional. An injection molded optical element 8, as used in exterior aircraft lights according to exemplary embodiments of the invention, may comprise one or more refractive portions only or may comprise one or more light reflective portions only.

The exterior aircraft light 2 also comprises a light transmissive outer cover 10. The light transmissive outer cover 10 may have a dome shape, as it is depicted in Fig. 2, and it may be arranged over the light sources 6 and the injection molded optical element 8. It is also possible that the light transmissive outer cover 10 is a substantially planar shield that may be arranged substantially parallel to the support element 4 or may be arranged at an angle to the support element 4. With such protective structure, the exterior aircraft light 2 may be conveniently placed on the exterior of an aircraft 100, with the protective structure shielding the components of the aircraft light 2 from environmental influences, such as particle impact, aerodynamic drag, potentially corroding exhaust gases, humidity and ice build-up on the components, etc.

A layer of light transmissive silicone rubber 12 is arranged between at least a portion of the injection molded optical element 8 and a portion 4b of the support element 4. The layer of light transmissive silicone rubber 12 provides adhesion between the injection molded optical element 8 and the support element 4. In other words, the injection molded optical element 8 is at least partly fixed to the support element 4 by the layer of light transmissive silicone rubber 12, formed between a portion of the injection molded optical element 8 and a portion 4b of the support element 4.

The layer of light transmissive silicone rubber 12 extends substantially parallel to the support element 4 and substantially parallel to a mounting surface 8a of the injection molded optical element 8, with the mounting surface 8a facing the support element 4.

The layer of light transmissive silicone rubber 12 may or may not have a constant thickness along its extension along the mounting surface 8a of the injection molded optical element 8.

The thickness of the layer of light transmissive silicone rubber 12 may in particular vary due to an uneven structure of the mounting surface 8a of the injection molded optical element 8 and/or due to an uneven structure of the side of the support element 4 facing the mounting surface 8a of the injection molded optical element 8.

The layer of light transmissive silicone rubber 12 may have a thickness h of between 1 mm and 10 mm, in particular a thickness h of between 2 mm and 7 mm.

The at least one light source 6 may, in particular, be embedded within the layer of light transmissive silicone rubber 12, as it is depicted in Fig. 2.

In alternative embodiments, which are not explicitly shown in the Figs., the at least one light source 6 may be arranged in a portion of the support element 4 that is not covered by the layer of light transmissive silicone rubber 12.

As depicted in Fig. 2, a recess 14 for accommodating the layer of light transmissive silicone rubber 12 may be formed on the side of the injection molded optical element 8 facing the support element 4. The recess 14 may in particular be open towards the at least one light source 6. Providing such a recess 14 may allow for the provision of a suitable mold for the layer of light transmissive silicone rubber 12, when being formed between the injection molded optical element 8 and the support element 4. Further, the at least one light source 6 may be placed within the recess 14, when the injection molded optical element 8 is mounted to the support element 4, as it is depicted in Fig. 2.

The recess 14 may, for example, have a diameter d of between 5 mm and 150 mm, in particular a diameter d of between 10 mm and 80 mm. The recess 14 may have a depth h of between 1 mm and 10 mm, in particular a depth h of between 2 mm and 7 mm.

A first portion 4a of the support element 4 may be arranged directly adjacent to the injection molded optical element 8. A second portion 4b of the support element 4 may be arranged directly adjacent to the layer of light transmissive silicone rubber 12, formed between the injection molded optical element 8 and the support element 4.

The layer of light transmissive silicone rubber 12 may in particular be in contact only with the second portion 4b, but not with the first portion 4a, of the support element 4. In other words, the first portion 4a of the support element 4 may not be adhered to the injection molded optical element 8 by the layer of light transmissive silicone rubber 12, and the second portion 4b of the support element 4 may be adhered to the injection molded optical element 8 by the layer of light transmissive silicone rubber 12, as it is depicted in Fig. 2.

The injection molded optical element 8 is formed by injection molding. For forming the injection molded optical element 8, a silicone rubber material may be injected with a high pressure p_{high} into a suitable mold.

The layer of light transmissive silicone rubber 12 is formed between the support element 4 and the injection molded optical element 8 by introducing a fluid phase of the light transmissive silicone rubber 12 into a gap, in particular into the recess 14, formed between the support element 4 and the injection molded optical element 8. This forming of the layer of light transmissive silicone rubber 12 may take place at a considerably lower pressure p_{low} than the pressure p_{high}, employed for injection molding. The layer of light transmissive silicone rubber 12 may in particular be formed by "gravity molding", i.e. by introducing the fluid phase of the light transmissive silicone rubber 12 into the gap, in particular into the recess 14, formed between the support element 4 and the injection molded optical element 8, only driven by gravity.

The pressure p_{high}, used for forming the injection molded optical element, may be at least 10 times as large as the pressure p_{low}, at which the layer of light transmissive silicone rubber is formed. In particular, the pressure p_{high}, used for forming the injection molded optical element, may be at least 30 times as large as the pressure p_{low}, at which the layer of light transmissive silicone rubber is formed.

Due to employing a lower pressure p_{low} for forming the layer of light transmissive silicone rubber 12, only small forces are exerted onto the injection molded optical element 8, the support element 4 and any components, in particular light sources 6, that are arranged on the support element 4 when the layer of light transmissive silicone rubber 12 is molded. In consequence, the risk of damaging the injection molded optical element 8, the support element 4 or any components that are arranged on the support element 4, when forming the layer of light transmissive silicone rubber 12, is considerably lower than in a comparative example of injection molding the combined geometry of all silicone rubber elements onto the support element 4, in which scenario much higher pressures would act on the support element 4 and the light sources 6.

Forming the injection molded optical element 8 by injection molding provides a very efficient way of forming the injection molded optical element 8. Injection molding may in particular allow for forming complex structures of the injection molded optical element 8, potentially having portions with small dimensions and/ or edges / corners with small radii of curvature, with high quality and with high reliability. Injection molding may in particular allow for forming complex geometries, which may not or may only be achieved in a non-efficient manner via other molding techniques.

The injection molded optical element 8 may in particular be an originally separate, refractive and/or reflective optical element, for example a pre-formed, originally separate lens, which may be in particular be pre-formed well before the manufacturing of the respective exterior aircraft light 2.

In an exterior aircraft light 2 according to an exemplary embodiment of the invention, as it is depicted in Fig. 2, light that is emitted by the at least one light source 6 travels first through the layer of light transmissive silicone rubber 12 and then through the injection molded optical element 8. Refractive and/or reflective effects of the injection molded optical element 8 contribute to shaping a desired light output of the exterior aircraft light 2.

The injection molded optical element 8 may be made of the same kind of light transmissive silicone rubber as the layer of light transmissive silicone rubber 12.

The layer of light transmissive silicone rubber 12 may be joined with the injection molded optical element 8 during its molding, such that there is no recognizable interface between the injection molded optical element 8 and the layer of light transmissive silicone rubber 12.

The layer of light transmissive silicone rubber 12 may in particular be cross-linked to the injection molded optical element 8, such that there is no recognizable interface between the injection molded optical element 8 and the layer of light transmissive silicone rubber 12.

In the absence of a recognizable interface between the injection molded optical element 8 and the layer of light transmissive silicone rubber 12, there is no optical boundary between the injection molded optical element 8 and the layer of light transmissive silicone rubber 12. By avoiding such an optical boundary, undesirable refractive and/or reflective effects may be prevented.

In the exemplary embodiment depicted in Fig. 2, multiple openings are formed in the support element 4. Two openings are visible in the cross-sectional view depicted in Fig. 2. In the exemplary embodiment of Fig. 2, the openings have a circular cross-section. Accordingly, the openings do not separate the support element 4 into an inner portion and an outer portion. Rather, the openings are channels / ducts through a one-piece support element 4.

The openings allow liquid light transmissive silicone rubber, which is intended to form the layer of light transmissive silicone rubber 12, to pass through the support element 4 into the recess 14 and allow air to pass through the support element 4 out of the recess 14. The liquid light transmissive silicone rubber may in particular be introduced into the recess 14 through at least one of the openings. In consequence, such openings may facilitate the forming of the layer of light transmissive silicone rubber 12 between the injection molded optical element 8 and the support element 4.

The openings may further result in the layer of light transmissive silicone rubber 12 comprising at least one protrusion 16, in particular two or more protrusions 16, that extend through the openings, formed in the support element 4. These protrusions 16 may enhance the mechanical connection between the layer of light transmissive silicone rubber 12 and the support element 4, resulting in an enhanced mechanical stability of the exterior aircraft light 2.

Depending on the amount of light transmissive silicone rubber that is introduced, a second layer of light transmissive silicone rubber may be formed on the rear side of the support element 4, i.e. on the side of the support element 4 facing away from the injection molded optical element 8. Such a second layer of light transmissive silicone rubber is not depicted in Fig. 2. The control electronics 5 and other components of the exterior aircraft light 2, which are located on the rear side of the support element 4, may be embedded in said second layer of light transmissive silicone rubber in order to be protected from water, moisture and dirt.

It is also possible that, in addition to or as an alternative to the openings in the support element 4, opening(s) is/are provided in the injection molded optical element 8, in particular in a peripheral portion thereof close to the support element 4. Such opening(s) may be used for molding the layer of light transmissive silicone rubber 12 in an analogous manner as the openings in the support element 4.

Before the injection molded optical element 8 is adhered to the support element 4 by the molding of the layer of light transmissive silicone rubber 12 between the injection molded optical element 8 and the support element 4, as it is depicted in Fig. 2, the injection molded optical element 8 may be positioned on the support element 4 employing a kinematic coupling fixture for establishing a fixed position of the injection molded optical element 8 with respect to the support element 4.

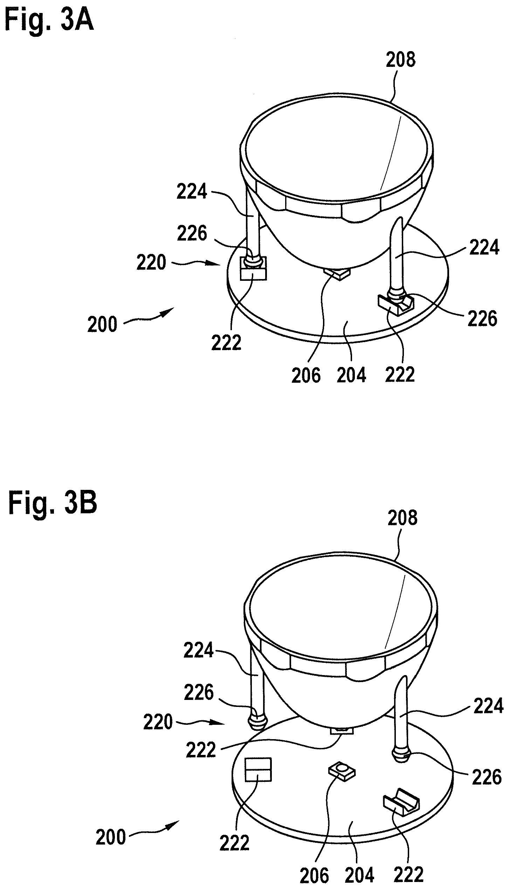

In the following, the principles of such a kinematic coupling fixture are explained with reference to Figs. 3A to 3F.

The principles of such kinematic coupling fixtures are explained in more detail in the European patent application No. 22 157 469.2, filed on February 18, 2022.

Figs. 3A and 3B show perspective views of selected components of an exemplary aircraft light 200, in which a kinematic coupling fixture is employed.

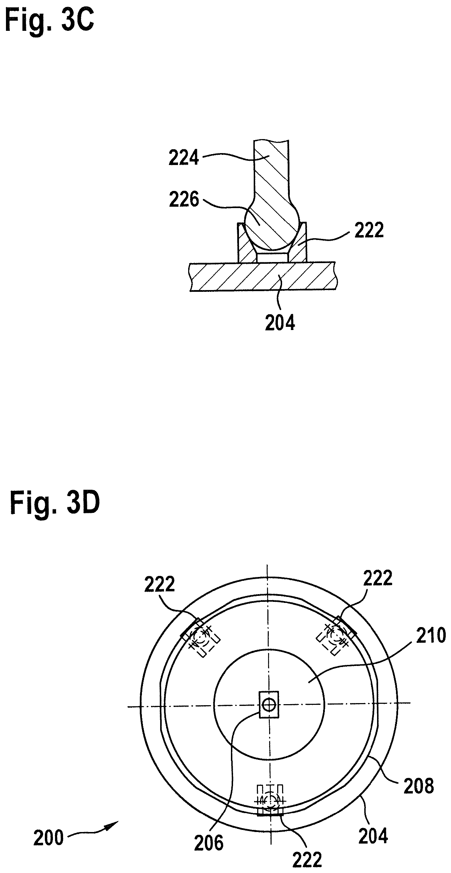

Figs. 3C to 3F show various views of selected components of the aircraft light 200, depicted in Figs. 3A and 3B.

Fig. 3A shows a perspective view of the exemplary aircraft light 200, with the perspective view showing a support element 204, a light source 206, for example an LED, and an optical element 208 of the aircraft light 200.

In the aircraft light 200 depicted in Figs. 3A and 3B, the optical element 208 is a reflector. In further embodiments, which are not explicitly shown in the figures, the optical element 208 may be an injection molded optical element 8, in particular an injection molded optical element 8 that is made of light transmissive silicone rubber and that comprises a light transmissive lens structure, as it is depicted in Fig. 2. In other words, the principles of the kinematic coupling fixture, described with respect to Figs. 3A to 3F, may be applied to the injection molded optical element 8, described above with respect to Fig. 2, in an analogous manner.

In the perspective view shown in Fig. 3A, the support element 204 is shown as having a disc shape, with the light source 206 being arranged at the center of said disc. It is understood that the support element 204 may have different shapes and that it may be more extensive than shown in Fig. 3A. It is also understood that the support element 204 may support more than the depicted components of the aircraft light 200. In particular, the support element 204 may support multiple light sources.

The optical element 208 is arranged over the light source 206. The optical element 208 has a cut-out section facing towards the support element 204. At least a portion of the light, emitted by the light source 206, enters the optical element 208 through the cut-out section and is reflected by the optical element 208. In the exemplary embodiment of Figs. 3A and 3B, the optical element 208 has a substantially parabolic shape.

A portion of the light, as emitted by the light source 206, is reflected by the optical element 208 and is collimated by the optical element 208, due to its parabolic shape, in a main light emission direction, substantially perpendicular to the support element 204. It is understood that the optical element 208 may have different geometries and/or set-ups with respect to the light source 206. In general, the optical element is an optical element that is arranged over the light source 206 and that conditions the light output of the light source 206.

The aircraft light 200 further comprises a kinematic coupling fixture 220, establishing a fixed position of the optical element 208 with respect to the support element 204. The kinematic coupling fixture 220 comprises three constraint shoes 222 and three coupling legs 224. Each of the coupling legs 224 has an engagement portion 226 at its support element facing end. The engagement portions 226 of the coupling legs 224 are in engagement with the constraint shoes 222, as will be described in more detail below. While there are three pairs of constraint shoes 222 and coupling legs 224, only two of those pairs are depicted in Fig. 3A, because one of the pairs is blocked from view by the optical element 208. Via the kinematic coupling fixture 220, the optical element 208 assumes its intended position with respect to the support element 204 and, thus, with respect to the light source 206 with a high degree of accuracy.

The support element 204 may be a printed circuit board (PCB). The support element 204 may have further electric components integrated into the support element 204, such as conductors to the light source 206. Also, the support element 204 may support further electric components, such as power terminals for connection to an external power source, such as drive circuitry for the light source 206, etc.

The aircraft light 200 may comprise further components that are not depicted in Figs. 3A to 3F for clarity of illustration. For example, the aircraft light 200 may have a light transmissive shield, such as a light transmissive outer cover 10, as it is depicted in Fig. 2, for protecting the depicted components of the aircraft light 200 from adverse environmental influences.

Fig. 3B shows the aircraft light 200 of Fig. 3A in a partially assembled state. In particular, Fig. 3B shows the optical element 208 and its coupling legs 224 separated from the support element 204. In this separated view, details of the constraint shoes 222 and the engagement portions 226 of the coupling legs 224 can be seen with more clarity than in the assembled state of Fig. 3A.

Each of the constraint shoes 222 comprises a v-shaped groove. Each of the coupling legs 224 comprises a substantially spherical engagement portion 226. During assembly of the aircraft light 200, the spherical engagement portions 226 are set into the v-shaped grooves of the constraint shoes 222. The combination of the three spherical engagement portions 226 and the three v-shaped grooves of the constraint shoes 222 results in a six point contact between the optical element 208 and the support element 204. Via these six contact points, the optical element 208 is constrained in six degrees of freedom with respect to the support element 204. Its position with respect to the support element 204 is exactly constrained. During assembly of the aircraft light 200, the optical element 208 falls into its intended position with respect to the light source 206 with high positional accuracy.

The three pairs of constraint shoes 222 and coupling legs 224 are arranged around the light source 206. In particular, the three pairs of constraint shoes 222 and coupling legs 224 are substantially equally spaced from the light source 206 and are distributed around the circumference of the optical element 208. In this way, a highly stable mechanical engagement between the support element 204 and the optical element 208 may be achieved. It is understood that the three pairs of constraint shoes 222 and coupling legs 224 may also be arranged around a plurality of light sources.

Fig. 3C illustrates the engagement between a single constraint shoe 222 and a single engagement portion 226 of a single coupling leg 224 in a cross-sectional view. The cross-sectional plane of Fig. 3C is orthogonal to the support element 204. Also, the cross-sectional plane of Fig. 3C is orthogonal to the longitudinal direction of the v-shaped groove.

The constraint shoe 222 comprises a v-shaped groove in that the side faces of the groove are inclined, i.e. the side faces of the groove are inclined with respect to the support element 204 and with respect to a plane orthogonal to the support element 204 and running along the longitudinal direction of the v-shaped groove. The substantially spherical engagement portion 226 of the coupling leg 224 rests on the side faces of the v-shaped groove of the constraint shoe 222. In particular, the substantially spherical engagement portion 226 has exactly two contact points with the v-shaped groove of the constraint shoe 222.

In the exemplary embodiment of Figs. 3A to 3C, the substantially spherical engagement portions 226 are larger in diameter than the remainder of the coupling legs 224. Other ratios between the diameters of the substantially spherical engagement portions 226 and the remainder of the coupling legs 224 are possible as well.

Fig. 3D shows the aircraft light 200 of Fig. 3A in a top view. In this top view, above described cut-out section 210 of the optical element 208 is visible. Due to the cut-out section 210, the light source 206 is visible in Fig. 3D. The constraint shoes 222 are almost entirely blocked from view by the optical element 208, with the blocked portions of the constraint shoes 222 being shown in phantom.

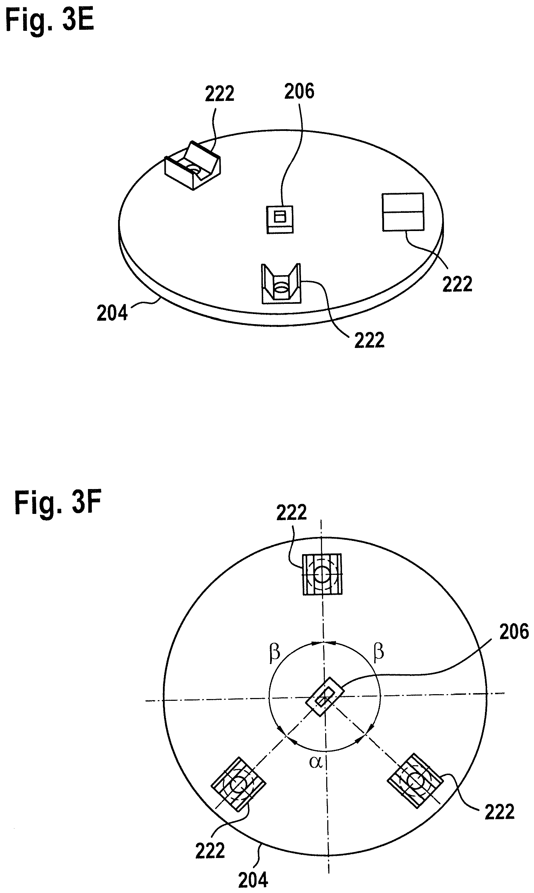

Fig. 3E shows a perspective view of the support element 204, the light source 206, and the constraint shoes 222 of the aircraft light 200 of Fig. 3A. In the absence of the optical element 208 and its coupling legs 224, the geometry of the v-shaped grooves is particularly apparent. In particular, the v-shaped grooves of the constraint shoes 222 have inclined side faces and a bottom structure, wherein at least parts of the bottom structure are substantially parallel to the support element 204. The geometry of the depicted constraint shoes 222 is considered to have a v-shaped groove, despite the v being cut off at the bottom.

Fig. 3F shows the components of Fig. 3E in a top view. The v-shaped grooves of the constraint shoes 222 are directed towards the light source 206, i.e. they are directed toward the center of the kinematic coupling fixture 220. As seen from the light source 206, two of the v-shaped grooves are angled at an angle α of about 90° with respect to each other. The remaining v-shaped groove is angled at an angle β of about 135° with respect to the other two v-shaped grooves. In this way, the three constraint shoes 222 are arranged around the light source 206 in a non-rotationally-symmetric manner. The optical element 208 can only be positioned with respect to the support element 204 in one orientation.

Employing a kinematic coupling fixture, as it is exemplarily depicted in Figs. 3A to 3F, allows for reliably positioning an injection molded optical element 8, as it is depicted in Fig. 2, in a predefined position on the support element 4, before the injection molded optical element 8 is adhered to the support element 4 by molding the layer of light transmissive silicone rubber 12 between at least a portion of the injection molded optical element 8 and at least a portion of the support element 4, as it is depicted in Fig. 2.

The injection molded optical element 8 may in particular be positioned at a predefined position with respect to the light sources 6 for generating a predefined light output of the exterior aircraft light 2 of the light emitted by the light sources 6. While the invention has been described with reference to exemplary embodiments, it will be understood by those skilled in the art that various changes may be made without departing from the scope of the invention. In addition, many modifications may be made to adapt a particular situation or material to the teachings of the invention without departing from the scope thereof. Therefore, it is intended that the invention not be limited to the particular embodiment disclosed, but that the invention will include all embodiments falling within the scope of the appended claims.

## Claims

1. Aircraft light (2), comprising:
a support element (4), supporting at least one light source (6), in particular at least one LED;
an injection molded optical element (8), made of light transmissive silicone rubber; and
a layer of light transmissive silicone rubber (12) arranged between at least a portion of the injection molded optical element (8) and at least a portion (4b) of the support element (4), wherein the layer of light transmissive silicone rubber (12) provides adhesion between the injection molded optical element (8) and the support element (4);
**characterized in that** a first portion (4a) of the support element (4) is directly adjacent to the injection molded optical element (8) and a second portion (4b) of the support element (4) is directly adjacent to the layer of light transmissive silicone rubber (12).

2. Aircraft light (2) according to claim 1, wherein the injection molded optical element (8) is a pre-formed, originally separate component, in particular a pre-formed, originally separate lens.

3. Aircraft light (2) according to claim 1 or 2, wherein the injection molded optical element (8) is made of the same kind of light transmissive silicone rubber as the layer of light transmissive silicone rubber (12); wherein the layer of light transmissive silicone rubber (12) is in particular cross-linked to the injection molded optical element (8)

4. Aircraft light (2) according to any of the preceding claims, wherein the layer of light transmissive silicone rubber (12) is molded at a lower pressure (p_{low}) than the injection molded optical element (8), wherein the layer of light transmissive silicone rubber (12) is in particular gravity molded.

5. Aircraft light (2) according to any of the preceding claims,
wherein the first portion (4a) of the support element (4) is not adhered to the injection molded optical element (8) and wherein the second portion (4b) of the support element (4) is adhered to the layer of light transmissive silicone rubber (12);
and/or
wherein the at least one light source (6) is embedded within the layer of light transmissive silicone rubber (12).

6. Aircraft light (2) according to any of the preceding claims, wherein the injection molded optical element (8) comprises a recess (14) for accommodating the layer of light transmissive silicone rubber (12), wherein the recess (14) is in particular open towards the at least one light source (6).

7. Aircraft light (2) according to claim 6,
wherein the recess (14) has a diameter (d) of between 5 mm and 150 mm, in particular a diameter (d) of between 10 mm and 80 mm; and/or
wherein the recess (14) has a depth (h) of between 1 mm and 10 mm, in particular a depth (h) of between 2 mm and 7 mm.

8. Aircraft light (2) according to any of the preceding claims, wherein the layer of light transmissive silicone rubber (12) comprises at least one protrusion (16), in particular two or more protrusions (16), extending through the support element (4) and/or around the support element (4).

9. Aircraft light (2) according to any of the preceding claims, wherein the injection molded optical element (8) is positioned on the support element (4) employing a kinematic coupling fixture, which establishes a fixed position of the injection molded optical element (8) on the support element (4).

10. Aircraft light (2) according to any of the preceding claims,
wherein the aircraft light (2) is an exterior aircraft light, such as a red-flashing anti-collision beacon light (120a, 120b), a white anti-collision strobe light (118), a landing light (122), a take-off light (124), a taxi light (126), a runway turn-off light (114), a navigation light (106), a logo light (108), a wing scan light (110), an engine scan light (112), a cargo loading light (116), or a multi-functional exterior aircraft light, which combines the functionalities of at least two of a red-flashing anti-collision beacon light (120a, 120b), a white anti-collision strobe light (118), a landing light (122), a take-off light (124), a taxi light (126), a runway turn-off light (114), a navigation light (106), a logo light (108), a wing scan light (110), an engine scan light (112), and a cargo loading light (116); or
wherein the aircraft light (2) is an interior aircraft light, such as a general cabin illumination light, a signal light, or a passenger reading light.

11. Aircraft (100), such as an airplane or a helicopter or a multicopter, comprising at least one aircraft light (2) according to any of the preceding claims.

12. Method of manufacturing an aircraft light (2), wherein the method comprises:
injection molding an injection molded optical element (8) from liquid light transmissive silicone rubber;
providing a support element (4), supporting least one light source (6), in particular at least one LED;
placing the injection molded optical element (8) on the support element (4); and
providing adhesion between the injection molded optical element (8) and the support element (4) by molding a layer of light transmissive silicone rubber (12) between at least a portion of the injection molded optical element (8) and at least a portion of the support element (4), such that a first portion (4a) of the support element (4) is directly adjacent to the injection molded optical element (8) and a second portion (4b) of the support element (4) is directly adjacent to the layer of light transmissive silicone rubber (12).

13. Method according to claim 12,
wherein the layer of light transmissive silicone rubber (12) is made of the same kind of light transmissive silicone rubber as the injection molded optical element (8);
wherein molding the layer of light transmissive silicone rubber (12) in particular comprises cross-linking an interface portion of the silicone rubber of the layer of light transmissive silicone rubber (12) to the injection molded optical element (8).

14. Method according to claim 12 or 13, wherein the the molding of the layer of light transmissive silicone rubber (12) includes at least one of:
positioning the injection molded optical element (8) on the support element (4) employing a kinematic coupling fixture;
passing liquid light transmissive silicone rubber through at least one opening formed in the support element (4);
filling liquid light transmissive silicone rubber into a recess (14) that is formed in the injection molded optical element (8) and that faces the support element (4);
molding the layer of light transmissive silicone rubber (12) via gravity molding.

## Patentansprüche

1. Luftfahrzeugleuchte (2), umfassend:
ein Trägerelement (4), das mindestens eine Lichtquelle (6), insbesondere mindestens eine LED, trägt;
ein spritzgegossenes optisches Element (8), hergestellt aus lichtdurchlässigem Silikonkautschuk; und
eine Schicht aus lichtdurchlässigem Silikonkautschuk (12), die zwischen mindestens einem Bereich des spritzgegossenen optischen Elements (8) und mindestens einem Bereich (4b) des Trägerelements (4) angeordnet ist, wobei die Schicht aus lichtdurchlässigem Silikonkautschuk (12) eine Haftung zwischen dem spritzgegossenen optischen Element (8) und dem Trägerelement (4) bereitstellt;
**dadurch gekennzeichnet, dass** ein erster Bereich (4a) des Trägerelements (4) direkt benachbart zu dem spritzgegossenen optischen Element (8) ist und ein zweiter Bereich (4b) des Trägerelements (4) direkt benachbart zu der Schicht aus lichtdurchlässigem Silikonkautschuk (12) ist.

2. Luftfahrzeugleuchte (2) nach Anspruch 1, wobei das spritzgegossene optische Element (8) ein vorgeformtes, ursprünglich separates Bauteil, insbesondere eine vorgeformte, ursprünglich separate Linse, ist.

3. Luftfahrzeugleuchte (2) nach Anspruch 1 oder 2, wobei das spritzgegossene optische Element (8) aus derselben Art von lichtdurchlässigem Silikonkautschuk wie die Schicht aus lichtdurchlässigem Silikonkautschuk (12) hergestellt ist; wobei die Schicht aus lichtdurchlässigem Silikonkautschuk (12) insbesondere mit dem spritzgegossenen optischen Element (8) vernetzt ist.

4. Luftfahrzeugleuchte (2) nach einem der vorhergehenden Ansprüche, wobei die Schicht aus lichtdurchlässigem Silikonkautschuk (12) bei einem niedrigeren Druck (p_{niedrig}) als das spritzgegossene optische Element (8) gegossen ist, wobei die Schicht aus lichtdurchlässigem Silikonkautschuk (12) insbesondere schwerkraftgegossen ist.

5. Luftfahrzeugleuchte (2) nach einem der vorhergehenden Ansprüche,
wobei der erste Bereich (4a) des Trägerelements (4) nicht an dem spritzgegossenen optischen Element (8) haftet und wobei der zweite Bereich (4b) des Trägerelements (4) an der Schicht aus lichtdurchlässigem Silikonkautschuk (12) haftet;
und/oder
wobei die mindestens eine Lichtquelle (6) in die Schicht aus lichtdurchlässigem Silikonkautschuk (12) eingebettet ist.

6. Luftfahrzeugleuchte (2) nach einem der vorhergehenden Ansprüche, wobei das spritzgegossene optische Element (8) eine Aussparung (14) zum Aufnehmen der Schicht aus lichtdurchlässigem Silikonkautschuk (12) umfasst, wobei die Aussparung (14) insbesondere zur mindestens einen Lichtquelle (6) hin offen ist.

7. Luftfahrzeugleuchte (2) nach Anspruch 6,
wobei die Aussparung (14) einen Durchmesser (d) zwischen 5 mm und 150 mm, insbesondere einen Durchmesser (d) zwischen 10 mm und 80 mm, aufweist; und/oder
wobei die Aussparung (14) eine Tiefe (h) zwischen 1 mm und 10 mm, insbesondere eine Tiefe (h) zwischen 2 mm und 7 mm, aufweist.

8. Luftfahrzeugleuchte (2) nach einem der vorhergehenden Ansprüche, wobei die Schicht aus lichtdurchlässigem Silikonkautschuk (12) mindestens einen Vorsprung (16), insbesondere zwei oder mehr Vorsprünge (16), aufweist, die sich durch das Trägerelement (4) und/oder um das Trägerelement (4) erstrecken.

9. Luftfahrzeugleuchte (2) nach einem der vorhergehenden Ansprüche, wobei das spritzgegossene optische Element (8) mittels einer kinematischen Kopplungsvorrichtung auf dem Trägerelement (4) positioniert ist, welche eine feste Position des spritzgegossenen optischen Elements (8) auf dem Trägerelement (4) herstellt.

10. Luftfahrzeugleuchte (2) nach einem der vorhergehenden Ansprüche,
wobei die Luftfahrzeugleuchte (2) eine Luftfahrzeugaußenleuchte ist, wie eine rot blinkende Kollisionsschutz-Leuchtfeuer-Leuchte (120a, 120b), eine weiße Kollisionsschutz-Blitzlicht-Leuchte (118), eine Landeleuchte (122), eine Startleuchte (124), eine Rollleuchte (126), eine Landebahn-Abbiegeleuchte (114), eine Navigationsleuchte (106), eine Logoleuchte (108), eine Flügelüberprüfungsleuchte (110), eine Triebwerksüberprüfungsleuchte (112), eine Frachtladeleuchte (116), oder eine multifunktionale Luftfahrzeugaußenleuchte, die die Funktionalitäten von mindestens zwei von einer rot blinkenden Kollisionsschutz-Leuchtfeuer-Leuchte (120a, 120b), einer weißen Kollisionsschutz-Blitzlicht-Leuchte (118), einer Landeleuchte (122), einer Startleuchte (124), einer Rollleuchte (126), einer Landebahn-Abbiege-Leuchte (114), einer Navigationsleuchte (106), einer Logoleuchte (108), einer Flügelüberprüfungsleuchte (110), einer Triebwerksüberprüfungsleuchte (112) und einer Frachtladeleuchte (116) vereint; oder
wobei die Luftfahrzeugleuchte (2) eine Luftfahrzeuginnenleuchte wie eine allgemeines Kabinenbeleuchtungsleuchte, eine Signalleuchte oder eine Passagier-Leseleuchte ist.

11. Luftfahrzeug (100), wie ein Flugzeug oder ein Helikopter oder ein Multikopter, umfassend mindestens eine Luftfahrzeugleuchte (2) nach einem der vorhergehenden Ansprüche.

12. Verfahren zum Herstellen einer Luftfahrzeugleuchte (2), wobei das Verfahren Folgendes umfasst:
Spritzgießen eines spritzgegossenen optischen Elements (8) aus flüssigem, lichtdurchlässigem Silikonkautschuk;
Bereitstellen eines Trägerelements (4), das mindestens eine Lichtquelle (6), insbesondere mindestens eine LED, trägt;
Platzieren des spritzgegossenen optischen Elements (8) auf dem Trägerelement (4); und
Bereitstellen einer Haftung zwischen dem spritzgegossenen optischen Element (8) und dem Trägerelement (4) durch Gießen einer Schicht aus lichtdurchlässigem Silikonkautschuk (12) zwischen mindestens einem Bereich des spritzgegossenen optischen Elements (8) und mindestens einem Bereich des Trägerelements (4), derart, dass ein erster Bereich (4a) des Trägerelements (4) direkt benachbart zu dem spritzgegossenen optischen Element (8) ist und ein zweiter Bereich (4b) des Trägerelements (4) direkt benachbart zu der Schicht aus lichtdurchlässigem Silikonkautschuk (12) ist.

13. Verfahren nach Anspruch 12,
wobei die Schicht aus lichtdurchlässigem Silikonkautschuk (12) aus derselben Art von lichtdurchlässigem Silikonkautschuk hergestellt ist wie das spritzgegossene optische Element (8);
wobei das Gießen der Schicht aus lichtdurchlässigem Silikonkautschuk (12) insbesondere das Vernetzen eines Grenzflächenbereichs des Silikonkautschuks der Schicht aus lichtdurchlässigem Silikonkautschuk (12) mit dem spritzgegossenen optischen Element (8) umfasst.

14. Verfahren nach Anspruch 12 oder 13, wobei das Gießen der Schicht aus lichtdurchlässigem Silikonkautschuk (12) mindestens eines beinhaltet von:
Positionieren des spritzgegossenen optischen Elements (8) auf dem Trägerelement (4) mittels einer kinematischen Kopplungsvorrichtung;
Durchlassen von flüssigem, lichtdurchlässigem Silikonkautschuk durch mindestens eine im Trägerelement (4) geformte Öffnung;
Einfüllen von flüssigem, lichtdurchlässigem Silikonkautschuk in eine Aussparung (14), die im spritzgegossenen optischen Element (8) geformt ist und dem Trägerelement (4) zugewandt ist;
Gießen der Schicht aus lichtdurchlässigem Silikonkautschuk (12) mittels Schwerkraftgießen.

## Revendications

1. Lumière d'aéronef (2), comprenant :
un élément de support (4), supportant au moins une source lumineuse (6), en particulier au moins une LED ;
un élément optique moulé par injection (8), en caoutchouc de silicone transmettant la lumière ; et
une couche de caoutchouc de silicone transmettant la lumière (12) disposée entre au moins une partie de l'élément optique moulé par injection (8) et au moins une partie (4b) de l'élément de support (4), dans laquelle la couche de caoutchouc de silicone transmettant la lumière (12) assure l'adhérence entre l'élément optique moulé par injection (8) et l'élément de support (4) ;
**caractérisé en ce qu'**une première partie (4a) de l'élément de support (4) est directement adjacente à l'élément optique moulé par injection (8) et qu'une seconde partie (4b) de l'élément de support (4) est directement adjacente à la couche de caoutchouc de silicone transmettant la lumière (12).

2. Lumière d'aéronef (2) selon la revendication 1, dans lequel l'élément optique moulé par injection (8) est un composant préformé, initialement séparé, en particulier une lentille préformée, initialement séparée.

3. Lumière d'aéronef (2) selon la revendication 1 ou 2, dans lequel l'élément optique moulé par injection (8) est fabriqué du même type de caoutchouc de silicone transmettant la lumière que la couche de caoutchouc de silicone transmettant la lumière (12) ; dans lequel la couche de caoutchouc de silicone transmettant la lumière (12) est en particulier réticulée à l'élément optique moulé par injection (8).

4. Lumière d'aéronef (2) selon l'une quelconque des revendications précédentes, dans lequel la couche de caoutchouc de silicone transmettant la lumière (12) est moulée à une pression inférieure (p_{inf}) à celle de l'élément optique moulé par injection (8), dans lequel la couche de caoutchouc de silicone transmettant la lumière (12) est en particulier moulée par gravité.

5. Lumière d'aéronef (2) selon l'une quelconque des revendications précédentes,
dans lequel la première partie (4a) de l'élément de support (4) n'est pas collée à l'élément optique moulé par injection (8) et dans lequel la seconde partie (4b) de l'élément de support (4) est collée à la couche de caoutchouc de silicone transmettant la lumière (12) ;
et/ou
dans lequel au moins une source lumineuse (6) est intégrée dans la couche de caoutchouc de silicone transmettant la lumière (12).

6. Lumière d'aéronef (2) selon l'une quelconque des revendications précédentes, dans lequel l'élément optique moulé par injection (8) comprend un évidement (14) destiné à accueillir la couche de caoutchouc de silicone transmettant la lumière (12), dans lequel l'évidement (14) est en particulier ouvert vers au moins une source lumineuse (6).

7. Lumière d'aéronef (2) selon la revendication 6,
dans lequel l'évidement (14) a un diamètre (d) compris entre 5 mm et 150 mm, en particulier un diamètre (d) compris entre 10 mm et 80 mm ; et/ou
dans lequel l'évidement (14) a une profondeur (h) comprise entre 1 mm et 10 mm, en particulier une profondeur (h) comprise entre 2 mm et 7 mm.

8. Lumière d'aéronef (2) selon l'une quelconque des revendications précédentes, dans lequel la couche de caoutchouc de silicone transmettant la lumière (12) comprend au moins une protubérance (16), en particulier deux ou plusieurs protubérances (16), s'étendant à travers l'élément de support (4) et/ou autour de l'élément de support (4).

9. Lumière d'aéronef (2) selon l'une quelconque des revendications précédentes, dans lequel l'élément optique moulé par injection (8) est positionné sur l'élément de support (4) en utilisant un dispositif de couplage cinématique, qui établit une position fixe de l'élément optique moulé par injection (8) sur l'élément de support (4).

10. Lumière d'aéronef (2) selon l'une quelconque des revendications précédentes,
dans lequel la lumière d'aéronef (2) est une lumière extérieure d'aéronef, tel qu'un feu anticollision rouge clignotant (120a, 120b), un feu stroboscopique anticollision blanc (118), un feu d'atterrissage (122), un feu de décollage (124), un feu de roulage (126), un feu de sortie de piste (114), un feu de navigation (106), un feu de logo (108), un projecteur de balayage d'aile (110), un projecteur de balayage moteur (112), un feu de chargement (116), ou une lumière extérieure d'aéronef multifonctionnelle, combinant les fonctionnalités d'au moins deux des feux suivants : feu anticollision rouge clignotant (120a, 120b), feu stroboscopique anticollision blanc (118), feu d'atterrissage (122), feu de décollage (124), feu de roulage (126), feu de sortie de piste (114), feu de navigation (106), feu de logo (108), un projecteur de balayage d'aile (110), un projecteur de balayage de moteur (112) et un projecteur de chargement de cargaison (116) ; ou
dans lequel la lumière d'aéronef (2) est une lumière intérieure d'aéronef, telle qu'une lumière d'éclairage général de cabine, une lumière de signalisation ou une lampe de lecture pour passagers.

11. Aéronef (100), tel qu'un avion ou un hélicoptère, comprenant au moins une lumière extérieure d'aéronef (2) selon l'une quelconque des revendications précédentes.

12. Procédé de fabrication d'une lumière d'aéronef (2), comprenant :
moulage par injection d'un élément optique moulé par injection (8) à partir de caoutchouc de silicone liquide transmettant la lumière ;
fournissant un élément de support (4), supportant au moins une source lumineuse (6), en particulier au moins une LED ;
placer l'élément optique moulé par injection (8) sur l'élément de support (4) ; et
assurer l'adhérence entre l'élément optique moulé par injection (8) et l'élément de support (4) en moulant une couche de caoutchouc de silicone transmettant la lumière (12) entre au moins une partie de l'élément optique moulé par injection (8) et au moins une partie de l'élément de support (4), de sorte qu'une première partie (4a) de l'élément de support (4) soit directement adjacente à l'élément optique moulé par injection (8) et qu'une seconde partie (4b) de l'élément de support (4) soit directement adjacente à la couche de caoutchouc de silicone transmettant la lumière (12).

13. Procédé selon la revendication 12,
dans lequel la couche de caoutchouc de silicone transmettant la lumière (12) est faite du même type de caoutchouc de silicone transmettant la lumière que l'élément optique moulé par injection (8) ;
dans lequel le moulage de la couche de caoutchouc de silicone transmetant la lumière (12) comprend en particulier la réticulation d'une partie d'interface du caoutchouc de silicone de la couche de caoutchouc de silicone transmettant la lumière (12) à l'élément optique moulé par injection (8).

14. Procédé selon la revendication 12 ou 13, dans lequel le moulage de la couche de caoutchouc de silicone transmettant la lumière (12) comprend au moins un des éléments suivants :
positionner l'élément optique moulé par injection (8) sur l'élément de support (4) en utilisant un dispositif de couplage cinématique ;
faire passer du caoutchouc de silicone liquide transmettant la lumière à travers au moins une ouverture formée dans l'élément de support (4) ;
remplir de caoutchouc de silicone liquide transmettant la lumière dans un évidement (14) formé dans l'élément optique moulé par injection (8) et qui fait face à l'élément de support (4) ;
moulage de la couche de caoutchouc silicone transmettant la lumière (12) par moulage par gravité.
